# EUROPÄISCHE PATENTSCHRIFT

(11) **EP 3 143 029 B1**
(45) Veröffentlichungstag und Bekanntmachung des Hinweises auf die Patenterteilung: **30.10.2019**
(21) Anmeldenummer: 15713855.3
(22) Anmeldetag: 25.03.2015
(51) Int. Cl.: C07F 9/10, C07F 9/117

(54) **VERFAHREN ZUR GEWINNUNG VON EINES ODER MEHRERER WERTSTOFFE AUS SAATEN**
METHOD FOR ACQUIRING ONE OR A PLURALITY OF RECYCLABLE MATERIALS FROM SEEDS
PROCÉDÉ D'OBTENTION D'UN OU DE PLUSIEURS MATIÈRES À PARTIR DE GRAINES

(30) Priorität: 08.04.2014 DE 102014104986
(43) Veröffentlichungstag der Anmeldung: 22.03.2017
(73) Patentinhaber: GEA Mechanical Equipment GmbH, 59302 Oelde (DE)
(72) Erfinder: HRUSCHKA, Steffen, 59302 Oelde (DE); ULLMANN, Detlef, 59302 Oelde (DE); BOSZULAK, Wladislawa, 59302 Oelde (DE)
(74) Vertreter: Specht, Peter
(86) Internationale Anmeldenummer: PCT/EP2015/056429
(87) Internationale Veröffentlichungsnummer: WO 2015/155010

(56) Entgegenhaltungen:
- EP-A1- 1 145 642
- WO-A1-2014/102176
- WO-A2-2013/001043
- DE-A1-102011 050 905
- US-A- 4 668 813
- US-A1- 2005 136 162

## Beschreibung

Die vorliegende Erfindung betrifft ein Verfahren zur Gewinnung wenigstens eines oder mehrerer Wertstoffe aus einem nativen, phytinsäurehaltigen bzw. phytathaltigen Stoffgemenge.

Es ist bekannt aus Saaten mit harten, zerbrechbaren Schalen, insbesondere aus Rapsfrüchten, eine Proteinphase als Wertstoffphase zu gewinnen. Insbesondere das Verfahren der DE 10 2011 050 905 A1 ermöglicht es, Proteine mit hoher Reinheit zu gewinnen, da u.a. durch die Erhöhung der Löslichkeit der Proteine offenbar auch Bindungen beispielsweise zu Verunreinigungen aus Zellulose bzw. Schalen und dergleichen gelockert werden. Eine Reihe von Saaten enthält dabei Phytinsäure. Die Phytinsäure unterstützt in den Pflanzen u.a. deren Wachstum, ist aber in der Proteinphase nicht unbedingt erwünscht. Sofern das zur Proteingewinnung verwendete Stoffgemenge bzw. das Saatgut Phytinsäure enthält, ist es von Interesse, dieses bzw. die entsprechende Phytinsäure ggf. auch als Phytat vom Protein zu trennen und sie allein für sich oder auch ergänzend zu einer Proteinphase als verwertbare Wertstoffphase zu gewinnen.

Darüber hinaus offenbaren die Dokumente WO 2013/001043 A2, US 4 668 813 A und US 2005/136162 A1 Verfahren zur Gewinnung von Phytinsäure oder Phytat. Vor diesem Hintergrund ist es die Aufgabe der Erfindung, ein Verfahren bereitzustellen, welches eine Gewinnung eines Phytinsäureproduktes insbesondere Phytinsäure oder Phytat aus einem nativen, phytinsäurehaltigen Stoffgemenge ermöglicht, gegebenenfalls auch zusätzlich zur Gewinnung weiterer Wertstoffe, wie die bereits erwähnte Proteinphase.

Die Erfindung löst diese Aufgabe durch die Merkmale des Anspruchs 1 und des Anspruchs 12.

Die Erfindung wird durch die Ansprüche definiert. Weitere vorteilhafte Ausgestaltungen der Erfindung sind Gegenstand der Unteransprüche.

Das erfindungsgemäße Verfahren zur Gewinnung wenigstens eines oder mehrerer Wertstoffe aus nativen phytinsäurehaltigen Stoffgemengen, wobei der wenigstens eine Wertstoff ein Phytinsäureprodukt, insbesondere Phytinsäure und/oder ein Phytat ist, nach Anspruch 1 weist danach zumindest folgende Schritte auf:
- Schritt A: Bereitstellen eines nativen phytinsäurehaltigen Stoffgemenges aus phytinsäurehaltigen Saaten mit harten, zerbrechbaren Schalen, insbesondere aus Rapsfrüchten, insbesondere als Stoffgemenge aus den vollständigen Saaten oder aus bereits (teil-) entölten Saaten, insbesondere als Presskuchen, der bei einem Abpressen von Öl insbesondere mit einer Presse als Rückstand der Ölgewinnung verbleibt oder als Expellerschrot, der nach einer Hexanextraktion als Rückstand verbleibt.
- Schritt B: Sofern das Stoffgemenge aus Schritt A noch nicht zerkleinert ist: Zerkleinern des Stoffgemenges, wobei jedenfalls die Schalen aufgebrochen werden;
- Schritt C: Dispergieren des zerkleinerten Stoffgemenges aus Schritt A) oder B) mit Wasser oder einer wässrigen Lösung, wobei auf einen Teil zerkleinertes Stoffgemenge vorzugsweise bis zu maximal 8, besonders vorzugsweise bis zu maximal 6 Teile, insbesondere bis zu maximal 5 Teile, Wasser zugegeben werden und wobei das Wasser und das zerkleinerte Stoffgemenge gerührt werden, so dass sich ein fließfähiger Brei bzw. eine Dispersion ergibt;
- Schritt D): Einstellen des pH-Wertes des Breis (I) aus Schritt C) in einen alkalischen Bereich von pH > 9,5;
- Schritt E): Zugeben eines wasserlöslichen organischen Lösemittels, insbesondere eines wasserlöslichen Alkohols, insbesondere von Ethanol, zu dem Brei D), insbesondere im Anschluss an das Einstellen des pH-Wertes des Breis im Schritt D); insbesondere derart, dass eine Alkoholkonzentration erreicht wird, die kleiner als 30 Vol.% ist, um die Schalen vom Endosperm der Saaten/Früchte zu lösen;
- Schritt F1): Abtrennen einer Feststoffphase, welche den überwiegenden Anteil der Schalen aufweist, aus dem Brei aus Schritt E), vorzugsweise in einer Zentrifuge im Zentrifugalfeld;
- Schritt F2): Isolieren von Phytinsäure oder von Phytaten aus der Feststoffphase des Schrittes F1).

Nachfolgend wird zumeist Phytinsäure und deren Gewinnung beschrieben. Allerdings versteht sich, dass auch die Salze der Phytinsäure, die sogenannten Phytate, gewinnbar sind oder ggf. in gelöster Form vorliegen. Je nach pH-Wert kann Phytinsäure oder ein Phytat vorliegen.

Hinsichtlich der Reihenfolge der Schritte B), C) und D) ist der Anspruch 1 nicht einschränkend zu verstehen. Die Schritte B), C) und D) können auch gleichzeitig oder in vertauschter Reihenfolge durchgeführt werden. Bevorzugt wird aber die zeitliche Abfolge B), dann C) und dann D).

Als Ausgangsmaterial wird das native Stoffgemenge aus Saaten (Samen) mit harten, zerbrechbaren Schalen, insbesondere aus ganzen Saaten/Früchten von Kreuzblütengewächsen (Brassicaceae), insbesondere von Rapsfrüchten, bereitgestellt. Nach Schritt A kann der Schalenanteil in besonders bevorzugter Ausgestaltung noch 100% des Schalenanteils der ungeschälten Saat enthalten. Es ist aber auch die Verarbeitung einer Saat mit einem niedrigeren Schalenanteil denkbar.

Erfindungsgemäß hat sich wider Erwarten gezeigt, dass sich durch die Vorbehandlung der Schritte C), D) und E) Phytate oder die Phytinsäure der Saat in gewinnbarer Form einer schalenhaltigen Feststoffphase zuordnet. Dies macht es möglich, nach dem Abtrennen der Schalenfraktion aus der Feststoffphase gemäß Schritt F1), aus der Feststoffphase mit der Phytinsäure und der Schalenfraktion die Phytinsäure als Wertstoff direkt oder - und dies ist besonders vorteilhaft - nach einem Durchlaufen weiterer Verfahrensschritte als Wertstoff zu gewinnen.

Nach einer besonders vorteilhaften Variante dieses Verfahrens weist der Schritt F2) dazu folgende Teilschritte auf:
- Schritt F2-A): Vermischen der Feststoffphase aus Schritt F1) mit Wasser und/oder einer wässrigen Lösung, insbesondere mit verdünnter Salzsäure, derart, dass eine fliessfähige, schalenhaltige und mit Wasser versetzte phytinsäure- und/oder phytathaltige Phase entsteht, deren pH Wert in einen saueren pH-Wertbereich, vorzugsweise pH < 4, verschoben ist; und
- Schritt F2-B) Abtrennen einer Feststoffphase, welche den überwiegenden Anteil der Schalen aufweist, von einer phytinsäurehaltigen und/oder phytathaltigen Flüssigkeitsphase und
- F2-C) Abtrennen der Phytinsäure aus der phytinsäurehaltigen oder phytathaltigen Flüssigkeitsphase.

Durch das Vermischen der Feststoffphase aus dem Schritt F1) mit Wasser oder einer wässrigen Lösung und das Verschieben des pH-Wertes ins Saure, insbesondere auf einen Wert pH ≤ 5,1, ergibt sich in einfacher Weise ein Feststoff-/Flüssigkeitsgemisch, dessen Flüssigkeitsphase jedenfalls einen wesentlichen Anteil an der Phytinsäure enthält, die in der Saat als Ausgangsprodukt enthalten war. Sodann ist der folgende weitere Teilschritt zur Gewinnung der Phytinsäure in Schritt zwischen den Schritten F2-B) und F2-C) vorteilhaft:
- Schritt F2-B1): Verschieben des pH-Wertes der Flüssigkeitsphase aus Schritt F2-B1) in einen weniger sauren Bereich, vorzugsweise mit einem pH-Wert von pH > 5.

Derart kann die Phytinsäure auf einfache Weise als Phytinsäureprodukt gewonnen werden und auch - ggf. nach dem Abtrennen des Schrittes F2 - in relativ reiner Form isoliert werden.

Insgesamt ergibt sich damit in einfacher Weise die Möglichkeit zur Gewinnung von Phytinsäure aus der phytinsäurehaltigen Saat bzw. dem aus der Saat hergestellten phytathaltigen Zwischenprodukt.

Die Erfindung schafft ferner auch das allgemeinere Verfahren zur Gewinnung wenigstens eines oder mehrerer Wertstoffe, insbesondere eines Phytinsäureproduktes vorzugsweise von Phytinsäure und/oder von Phytat, aus einem nativen, phytinsäurehaltigen Stoffgemenge, nach Anspruch 12 mit folgenden Schritten:
100) Bereitstellen eines nativen phytinsäurehaltigen und/oder phytathaltigen, zerkleinerten Stoffgemenges aus phytinsäurehaltigen Saat und/oder phytathaltigen Saaten-Zwischenprodukten;
200) Vorbehandeln des zerkleinerten Stoffgemenges, um einen fliessfähigen alkalischen, vorzugsweise alkoholisch-alkalischen, Brei zu erhalten;
300) Abtrennen einer Feststoffphase, welche Phytinsäure und/oder zumindest ein Phytat aufweist, aus dem fliessfähigen Brei, vorzugsweise in einer Zentrifuge im Zentrifugalfeld; und
400) Isolieren von Phytinsäure und/oder zumindest eines Phytats aus der Feststoffphase nach einem Durchlaufen weiterer Schritte.

Hierbei ist es wiederum besonders vorteilhaft, wenn das native phytinsäurehaltige, zerkleinerte Stoffgemenge aus phytinsäurehaltigen Saaten mit den gesamten Schalen oder einem Teil der Schalen (insbesondere mehr 30%, vorzugsweise mehr als 50%) der Saaten besteht und dass im Schritt des Vorbehandelns die Phytinsäure in einen schalenhaltigen Feststoffanteil des Stoffgemenges verschoben wird. Es ist aber auch die Verarbeitung eines Stoffgemenges ohne Schalenanteil möglich. So ist es auch zweckmäßig, wenn das native sowie phytinsäurehaltige und/oder phytathaltige, zerkleinerte Stoffgemenge aus phytinsäurehaltigen Saaten ohne deren Schalen besteht und dass die Phytinsäure und/oder zumindest ein Phytat zunächst in einen Feststoffanteil des Stoffgemenges verschoben wird

Um die Phytinsäure zu gewinnen, ist es vorteilhaft, wenn der Schritt 400) folgende Teilschritte aufweist:
- Schritt 400-A): Vermischen der Feststoffphase aus Schritt 300) mit Wasser und/oder einer wässrigen Lösung, insbesondere mit verdünnter Salzsäure, derart, dass eine fliessfähige, schalenhaltige und mit Wasser versetzte phytinsäure- und/oder phytathaltige Phase entsteht, deren pH Wert n einen saueren pH-Wertbereich verschoben ist; und
- Schritt 400-B) Abtrennen einer Feststoffphase, welche ggf. den überwiegenden Anteil der Schalen aufweist, von einer phytinsäurehaltigen und/oder phytathaltigen Flüssigkeitsphase und
- F400-C) Abtrennen der Phytinsäure aus der phytinsäurehaltigen oder phytathaltigen Flüssigkeitsphase direkt oder nach dem Durchlaufen eines oder mehrerer weiterer Schritte

Dabei wird weiter vorzugsweise folgender Teilschritt zwischen den Schritten F400-B und F400-C ausgeführt:
- F400-B1): Verschieben des pH-Wertes der Flüssigkeitsphase aus Schritt F400-B) in einen Bereich mit einem pH-Wert von pH > 5.

Der Schritt des Vorbehandelns umfasst dabei die Schritte C) bis E). Die Schritte des Abtrennens und Gewinnens der Phytinsäure können zudem wieder, wie vorstehend beschrieben, mehrere Teilschritte aufweisen.

Zu den Schritten A) bis F1) ist noch Folgendes anzumerken.

### Schritt A:

Das Stoffgemenge im Sinne dieser Anmeldung kann aus den vollständigen, jedoch gebrochenen Saaten bestehen.

Alternativ kann das Stoffgemenge aber auch aus einem bereits entölten Produkt bestehen, insbesondere aus einem "Zwischenprodukt", d.h. aus einem Presskuchen, der nach einer "Vorstufe", z.B. dem Abpressen von Öl, insbesondere mit einer Presse (z.B. einer Schneckenpresse) als Rückstand der Ölgewinnung verbleibt.

Besonders bevorzugt wird als das Ausgangsmaterial "kurz zuvor gewonnenes Zwischenprodukt" verarbeitet, d.h. nach der Vorstufe dürfen nicht mehr als 31 Tage vergangen sein.

Die Saat kann frisch geerntet oder aber Tage, Wochen oder Monate alt sein, die Zwischenstufe (das Pressen) sollte kurz oder sogar unmittelbar vor der weiteren Verarbeitung stattfinden, damit sich nach der Ölgewinnung das Material - die Saat - nicht zu stark verändert hat.

Ganz bevorzugt wird als das Ausgangsmaterial "frisches Material" verarbeitet, d.h. nach eine Vorstufe bzw. Vorbearbeitung (Ölgewinnen) dürfen nicht mehr als 3 Tage vergangen sein, vorzugsweise sogar nur weniger als 48 Stunden oder 24 Stunden oder 12 h oder weniger als 1 h.

Mit Material aus einem Zeitraum kurz nach der Vorstufe werden gute oder und mit frischem Material in der Regel nochmals bessere Ergebnisse hinsichtlich der Ausbeute und der Reinheit der Wertprodukte erzielt.

Der Presskuchen kann einen Restölgehalt aufweisen, der auch bei 20 Vol% oder mehr liegen kann. Trotz derart hoher Restölgehalte ist die Gewinnung auch einer Proteinphase mit der Erfindung auf einfache Weise realisierbar.

### Schritt B:

Sofern es noch nicht zerkleinert vorliegt: Zerkleinern des Stoffgemenges aus Schritt a) zum Aufbrechen der Schalen. Sofern ein Presskuchen verwendet wird, wird dieser aufgebrochen, idealerweise unmittelbar nach dem Pressen, noch warm. Derart wird ein zerkleinertes Material - eine Art Granulat - aus dem Presskuchen erzeugt. Das zuvor durch einen Pressvorgang (teil-) entölte Stoffgemenge wird in der Regel nur zerkleinert, beispielsweise zermahlen oder es werden jedenfalls die Schalen aufgebrochen.

### Schritt C:

Das bereitgestellte und zerkleinerte Stoffgemenge aus Schritt A) oder B) wird mit Wasser dispergiert. Auf einen Teil "zerkleinertes Produkt" werden vorzugsweise bis zu maximal 8, vorzugsweise bis zu maximal 5 Teile Wasser zugegeben. Sodann werden Wasser und zerkleinertes Produkt gerührt, so dass sich ein fließfähiger Brei bzw. eine Dispersion ergibt. Das Rühren erfolgt vorzugsweise für 15 min oder mehr, auch mehr als 30 min, insbesondere für mehr als 1 h. Alternativ oder zusätzlich zu Wasser kann auch eine wässrige Lösung genutzt werden. Diese kann weitere gelöste organische oder anorganische Bestandteile (z.B. Salze oder wasserlösliche organische Lösemittel) enthalten.

### Schritt D)

Als Nächstes erfolgt ein Einstellen des pH-Wertes des Breis (I) aus Schritt C) in einen alkalischen Bereich; Vorzugsweise wird der pH-Wert des Breis bzw. der Dispersion mit Lauge auf pH 10 bis 11 eingestellt. Dabei wird (vorsichtig) das Rühren fortgesetzt. Die Verrührzeit beträgt 15 min oder mehr, vorzugsweise mehr als 30 min, vorzugsweise liegt sie bei 1 h oder darüber.

### Schritt E)

In diesem weiteren Schritt erfolgt ein Zugeben mindestens eines wasserlöslichen organischen Lösemittels im Anschluss an das Einstellen des pH-Wertes des Breis im Schritt D. Vorzugsweise wird die Dispersion, deren pH-Wert in den alkalischen Bereich eingestellt worden ist, mit dem Alkohol Ethanol (vorzugsweise 30-60%ig) auf eine Alkoholkonzentration von 15-20 Vol.% oder weniger, insbesondere 12 Vol.% an Ethanol gebracht. Entsprechend der Wassermenge des verwendeten Alkohols kann die Wassermenge in Schritt C um das im Alkohol, insbesondere im 30-60%igen Ethanol enthaltene Wasser, reduziert werden. Damit lösen sich die Schalen vom Kotyledon mit dem Restöl und können abgetrennt werden, insbesondere zentrifugal.

Die Schritte C-E werden vorzugsweise nacheinander ausgeführt, können alternativ auch gemeinsam, also zeitgleich, ausgeführt werden. Denn für die Gewinnung der Phytinsäure ist die Reihenfolge weniger entscheidend. Dieses zeitgleiche Zufügen kann z.B. durch Zugabe von verdünnter Ethanollösung erfolgen, in welcher NaOH gelöst vorliegt. In diesem Fall erfolgen sowohl die Zugabe eines Alkohols, von Wasser oder einer wässrigen Lösung und das Verschieben in den basischen pH-Wert durch Zugabe der oben-genannten Mischung als eine Kombination der Schritte C-E.

### Schritt F1)

Im Schritt F1) erfolgt daher ein Abtrennen einer Feststoffphase, welche den überwiegenden Anteil der Schalen umfasst, vorzugsweise in einer Zentrifuge im Zentrifugalfeld aus dem Brei bzw. es erfolgt ein Klären des Breis von Schalen-Feststoffanteilen insbesondere in einem Dekanter.

Die leichtere Phase einer zentrifugalen Phasentrennung wird nachfolgend auch gelegentlich als Oberlauf bezeichnet und die Feststoffphase als schwere Phase. Eine Mittelphase läge entsprechend bzgl. ihrer Dichte dazwischen.

Es ist ein besonderer Vorteil des erfindungsgemäßen Verfahrens, dass sich im Anschluss an den Schritt F1) aus den in diesem Schritt getrennten Phasen weitere Wertstoffe gewinnen lassen. Dies wird aus der weiteren Beschreibung deutlich werden. Eine weitere Wertphase lässt sich aus dem Oberlauf gewinnen (also aus der Flüssigkeitsphase).

Dazu werden nach dem Schritt F1) folgende weitere Schritte durchlaufen:

### Schritt G)

Der jedenfalls weitestgehend schalenfreie Brei des Oberlaufes aus Schritt F1) wird ebenfalls weiterverarbeitet. Vorzugsweise erfolgt dabei eine Ausfällung des gelösten Proteinanteiles aus dem schalenfreien Brei, der zusammen mit dem un- oder angelösten Protein-Teil eine Fraktion bildet, den Quark. Der pH-Wert wird dabei wieder weiter in den sauren Bereich verschoben, insbesondere in den pH-Bereich von pH = 4,5 bis pH = 7.

### Schritt H)

Sodann wird der schalenfreie Brei des Oberlaufs, dessen pH-Wert wieder ins Saure verschoben worden ist, - vorzugweise in einer Zentrifuge, insbesondere in wenigstens einem Dekanter oder in einem Separator - in einem oder zwei Schritten in Wertstoffphasen getrennt, von denen eine Phase eine konzentrierte Proteinphase ist. Besonders bevorzugt erfolgt eine Trennung in folgende zwei oder drei Phasen:
- ölhaltige Phase;
- wässrige Phase (Polyphenol-, Kohlenhydrat- und Sinapinsäurehaltig);
- Proteinkonzentratphase (nachfolgenden auch "Proteinquark" genannt)
   oder
- wässrige Phase mit Albumingehalt und Restölgehalt; und
- Proteinkonzentratphase (Proteinquark);

Die Zwei-Phasentrennung wird dann gewählt, wenn das Rohmaterial relativ stark entölt ist und/oder im Feststoff gebunden vorliegt oder wenn kein intensiver Scherungseinfluss für die Flüssigkeitsphase in Schritt 1 ausgeführt worden ist. Die Zugabe von Wasser oder Alkohol oder Lauge oder dgl. kann auch in Teilschritten erfolgen. Das Öl als leichtere Phase enthält Triglyceride und ist einer der gewinnbaren Wertstoffe.

Vorzugsweise liegt die Temperatur während sämtlicher Verfahrensschritte unter 60°C, insbesondere unter 50°C, vorzugsweise, zwischen 40 °C und 50°C, wodurch sich besonders wertvolle z.T. temperatursensible Produkte schonend gewinnen lassen.

Die Denaturierung der Proteine ist ein temperatur- und zeitabhängiger Prozess. Hinzu kommt die Bedingung im alkoholischen Milieu. Die Proteindenaturierung geht umso schneller, je höher die Temperatur ist. In wässriger Umgebung ist bei Wärmeinwirkungen von 45-50 °C keine irreversible Proteindenaturierung zu erwarten. Das ändert sich aber mit der Alkoholkonzentration. Schon bei Umgebungstemperatur ist bei hochkonzentriertem Alkohol eine Proteinausfällung zu beobachten.
Je geringer nun die Alkoholkonzentration ist, umso höher muss die Temperatur sein, um die Proteine zu denaturieren. Oder umgekehrt: je wässriger die Alkoholkonzentration ist, umso höher darf die Arbeitstemperatur sein, ohne dass die Proteine irreversibel geschädigt werden.

Man wird also (für reines Wasser) eine möglichst hohe, d.h. möglichst an 60°C heranreichende Temperatur wählen, um möglichst viele Stoffe in Lösung zu bringen, wie Proteine, Lecithine, Glycolipide etc.. Damit können die Zellulose, das Lignin und Stoffe wie Natrium oder Ca-Phytate als schwer- oder unlösliche Bestandteile der oder mit der Schalenfraktion abgetrennt werden. Es ist jedoch darauf zu achten, dass die Temperatur entsprechend den Prozessparametern Zeit und Alkoholkonzentration (ggf. Druck) hinreichend niedrig bleibt.

Die gefällten Proteine liegen als Proteinquark vor (schwere Phase). Sie bilden einen weiteren der gewinnbaren Wertstoffe. Diese Phase kann gut zu Pulver getrocknet werden.

Insgesamt wird eine auch optisch ansprechende und daher gut weiter verwertbare Proteinkonzentratphase gewonnen, die in einer Farbeinstufungsskala RAL den Werten RAL 1015 (Hellelfenbein) oder RAL 1013 (Perlweiß) oder einem Gemisch dieser beiden Farbtöne zuzuordnen ist. Als RAL-Farbe werden normierte Farben bezeichnet (RAL GmbH, Tochter des RAL-Institutes) Jeder Farbe ist eine vierstellige Farbnummer zugeordnet. Theoretisch kann für das Verfahren jeder Presskuchen verwendet werden.

Die vorteilhafte Temperaturangabe zu den Verfahrensschritten A) bis H) bezieht sich nicht auf die Presstemperatur beim Erzeugen des Presskuchens bei der Ölerzeugung. Je höher die Temperatur bei den vorangegangen Prozessschritten war, umso brauner wird die Proteinphase bzw. Quarkfraktion. Dies liegt einerseits an der Maillard-Reaktion von Zuckern mit Proteinen, andererseits an der Phenoloxidation. Gegenüber der DE 10 2011 050 905 A1 wird insbesondere durch die Verwendung optimiert ausgewählten Ausgangsmaterials (vorzugsweise kalt gepresster RapsPresskuchen, vorzugsweise sehr frisch) ein besonders ansprechendes, besonders gut weiterverwertbares Produkt gewonnen.

Besonders vorteilhaft ist die Verwendung kalt gepressten Materials, nämlich eines kalt gepressten Rapspresskuchens (Temperatur beim Pressen kleiner als 70°C, vorzugsweise sogar kleiner als 60°C) als Ausgangsmaterial bzw. als das bereitgestellte Stoffgemenge. Warm gepresstes Material wird beim Pressen deutlichen höheren Temperaturen (bis über 100° C) ausgesetzt. Durch die Verwendung kalt gepressten Materials als Ausgangsmaterial für das erfindungsgemäße Verfahren kann eine Proteinphase bzw. "Protein- bzw. Quarkphase" mit deutlich besseren Eigenschaften (insbesondere hinsichtlich der Farbe deutlich heller und daher besser verarbeitbar, mit deutlich höherem Wasserbindevermögen beispielsweise von 1 Anteil Quarkpulver + 3 Anteile Wasser und mit deutlich besserer Ausbeute gewonnen werden als bei der Verwendung warm bzw. heiß gepressten Ausgangsmaterials. Dies wurde im Stand der Technik bisher nicht erkannt. Denn gängige Rapspressverfahren zielen auf eine hohe Ölausbeute, weshalb beim Pressen gern höhere Temperaturen verwendet werden. Als Nebeneffekt ist festzustellen, dass Polyphenol abgebaut wird, was an sich vorteilhaft für die Proteinfraktion wäre.

Beim erfindungsgemäßen Verfahren stellt der originale, also nicht reduzierte, Polyphenolgehalt im kalt gepressten Kuchen aber dennoch kein Problem für das Endprodukt dar, da die polyphenolischen Verbindungen im Wesentlichen nicht in der Quarkphase zu finden sind, da sie in die Wasserphase übergehen.

So ist die Quarkphase, die nach dem erfindungsgemäßen Verfahren aus einem zuvor mit Hexan zusätzlich entöltem Presskuchen gewonnen wurde eher dem RAL-Ton 1024 ockergelb oder 1014 Elfenbein zuzuordnen. Die Verarbeitung erfolgt vorzugsweise unter Umgebungsdruck.

Auch in der Wasserphase sind noch wertvolle Inhaltsstoffe enthalten, insbesondere ist sie relativ stark albuminhaltig. Sinnvoll und vorteilhaft ist insofern eine Einengung bzw. Konzentration z.B. durch Filtration der Wasserphase aus dem vorhergehenden Schritt zur Albumin-Aufkonzentrierung, um derart die Albuminphase als weiteren Wertstoff zu gewinnen.

Eine besonders vorteilhafte Verfahrensvariante sei anhand des folgenden Beispiels erläutert.

Schritte A, B): Ausgangsmaterial ist bei diesem Beispiel bereitgestellter gepresster Rapskuchen (oder auch Sonnenblumenschrot oder Leguminosenmehl), idealerweise schonend und kalt gepresst, mit typischen Restölgehalten von 10%; auch höher stellt kein Problem dar). Der Kuchen wird aufgebrochen, idealerweise unmittelbar nach dem Pressen, noch warm.

Schritt C): Das Kuchengranulat wird mit Wasser dispergiert (1 Teil Kuchen und max. 6 Teile Wasser) und ist vorsichtig zu rühren (1 h).

Schritt D): Diese Dispersion ist nach oder während des Schrittes B) mit Lauge, vorzugsweise NaOH-Lauge, auf pH 10 bis 11 einzustellen und vorsichtig zu rühren, vorzugsweise 15 min bis 1 h.

Schritt E) Die Dispersion aus Schritt D) ist mit EtOH (Ethanol) (vorzugsweise 30-60%ig) auf eine 12%ige EtOH - Konzentration zu bringen, somit wird die Wassermenge. um das in diesem 30-60%igen EtOH enthaltene Wasser reduziert.

Schritt F1) Im Ethanol lösen sich die Schalen vom Endosperm (Kotyledon) mit dem Restöl und können mit der Phytinsäure, die sich überraschend an der Schalenfraktion bzw. schalenhaltigen Feststoffphase als Teil der Feststoffphase sammelt, beispielsweise zentrifugal abgetrennt werden.

Es ist denkbar, das Verfahren auch mit anderen wasserlöslichen organischen Lösemitteln, so z.B. mit anderen wasserlöslichen Alkoholen, wie z.B. Isopropanol, durchzuführen.

Im Verfahren einsetzbar ist auch Calziumhydroxid. Hierbei wird Ca-Phytat erzeugt, das schwerer als ein-Na Phytat löslich ist. Bei dieser finalen pH-Verschiebung vom sauren in den weniger sauren Bereich bis neutralen Bereich wird die gelöste Phytinsäure als Phytat ausgefällt und somit aus dem Fluid abtrennbar beispielsweise durch Zentrifugation, Gravitation oder Filtration.

### Versuch 1:

Eine in vorstehend beschriebener Weise mit den Schritten A) bis F1) gewonnene phytinsäurehaltige Schalenfraktion wurde weiterverarbeitet, um Phytinsäure zu gewinnen.

Hierzu wurden 220 g der Schalenfraktion mit 300 g Wasser bei Raumtemperatur (hier 20°C) in einem Schritt F2-A) vermischt. Die Reaktionszeit betrug 5 min. Nach 5 min wurde der pH-Wert des Schalen-/Wassergemischs mittels Salzsäure (hier 11,1 g Salzsäure bzw. HCl, 10%ig) ins Saure verschoben auf pH = 3,7 (Schritt F2-B). Die Reaktionszeit betrug 5 min.

Ein Schleudertest zeigte, dass sich im Becherglas ganz unten eine Schalenphase von ca. 30 % des Volumens der Probe absetzte. Über dieser lag eine gelbe Proteinphase von ca. 15% Anteil am Volumen, über welcher sich wiederum eine trübe, gelbliche Wasser-Alkohol-Phytinsäurephase mit einem Anteil von 54% am Volumen sammelte. Über dieser sammelte sich schließlich eine nicht eindeutig bestimmbare Schwimmschicht, die ca. 1 % des Volumens im Becherglas ausmachte (Schritt F2-C1).

Im industriellen Maßstab kann die Feststoffphase aus der Wasser-Alkohol-Phytinsäurephase durch ein Absetzen lassen aber auch auf andere Weise, so zentrifugal insbesondere im Dekanter abgetrennt werden.

Es ist vorteilhaft, wenn sodann ein Verschieben des pH-Wertes der Flüssigkeitsphase aus Schritt F2-C1) in einen weniger saueren, vorzugsweise neutralen, Bereich erfolgt. Im Versuch erfolgte dies durch Zugabe von 0,87g Natronlauge (16%ig) zu der gelben Wasser-Alkohol-Phytinsäurephase. Im Schleudertest sammelte sich im Becherglas unten Phytinsäure, die einen Anteil von ca. 5 % (Vol. %) an der Flüssigkeitsphase hatte, über welcher sich eine Wasser/Alkoholphase absetzte, die einen Anteil von ca. 94% an der Flüssigkeitsphase hatte. Über dieser sammelte sich schließlich eine nicht eindeutig bestimmbare Schwimmschicht, die ca. 1 % des Volumens im Becherglas ausmachte (Schritt F2-C1).

Insgesamt können aus der Schalenfraktion aus Schritt F1) derart einige Gramm an Phytinsäure gewonnen werden.

Der Phytinsäuregehalt im Rapspresskuchen liegt typischerweise bei 3 - 4 Gew % der Trockenmasse des Rapspresskuchens. Durch Verwendung geschälter Saaten erhöht er sich, beispielsweise auf ca. 6 - 7Gew % der Trockenmasse des Presskuchens. Damit erhöht sich der schalenspezifischen Phytinsäuregehalt bei Verwendung von Saaten im Rapspresskuchen, die noch einen Teil ihrer ursprünglicher Schalen enthalten (z.B. 30% oder mehr der Schalen) entsprechend.

### Versuch 2:

Eine in vorstehend beschriebener Weise mit den Schritten A) bis F1) gewonnene phytinsäurehaltige Schalenfraktion wurde wiederum weiterverarbeitet, um Phytinsäure zu gewinnen.

Hierzu wurden 100 g der Raps-Schalenfraktion mit 150g Wasser bei Raumtemperatur (hier 20°C) in einem Schritt F2-A) vermischt. Die Reaktionszeit betrug 5 min. Nach 5 min wurde der pH-Wert des Schalen-/Wassergemischs mittels Salzsäure (hier 3,4 g Salzsäure bzw. HCl, 10%ig) ins Saure verschoben auf pH = 3,7 (Schritt F2-B). Die Reaktionszeit betrug wiederum 5 min.

Ein Schleudertest zeigte, dass sich im Becherglas ganz unten eine Schalenphase von ca. 30% des Volumens der Probe absetzte. Über dieser lag eine gelbe Proteinphase von ca. 20% Anteil am Volumen, über welcher sich wiederum eine etwas dunklere Phytinsäurephase mit einem Anteil von 3% am Volumen sammelte. Über dieser sammelte sich eine Wasser-/Alkoholphase von ca. 47 Vol%. Die Phytinsäurephase lässt sich wiederum separat abtrennen

Ergänzend kann aus der Flüssigkeitsphase aus Schritt F1) jeweils jedenfalls eine Proteinphase gewonnen werden.

Sinnvoll ist hierzu eine Ausfällung vom Protein durch Ansäurern der leichten Phase aus dem Oberlauf auf vorzugsweise pH = 4,5 bis 7,2. Diese leichte Phase weist nach der Separation vor dem Ansäuern zunächst einen pH-Wert von vorzugsweise 9,7 bis 10,5 auf.

Die Trennung in eine Öl - Wässrige Phase - Proteinkonzentratphase (Proteinquark) oder die Trennung in eine Öl/Wasserphase und Proteinkonzentratphase kann unterstützt werden durch eine intensive Scherung, um die Ölfreisetzung zu erleichtern. Sodann erfolgt vorzugsweise eine Abtrennung der gefällten Proteine als Quark in der schweren Phase, welche in der Regel die Feststoffphase oder die sogenannte Quarkphase ist. Zudem können ggf. Triglyceride als leichtes Öl aus dem Oberlauf, also der leichten Phase, insbesondere zentrifugal und ggf. eine Filtration der Wasserphase zur Albumin-Aufkonzentrierung gewonnen werden.

Als besonders vorteilhaft zu erwähnen ist die Nasstrennung der Schalen von den gelösten und gequollenen Proteinen bei parallel stattfindender Verdrängungsextraktion der Triglyceride (Ölphase) aus Öl- oder restölhaltigem Presskuchen oder Leguminosen Mehl und parallel verlaufender Polyphenolextraktion.

Die besonderen Vorteile des Verfahrens sind:
Es sind geringe Verdünnungen und damit geringe Volumenströme im Prozess durch das vorbeschriebene Verfahren realisierbar bei gleichzeitig geringem Lösungsmittelabfall.

Es ergibt sich eine höhere Polyphenolkonzentrationen während der Extraktion in der wässrigen Phase (Verfahrensschritte 2 bis 5),
Native temperaturempfindliche Proteine sind zudem im Endprodukt enthalten, da der Prozess bei max. 50-55°C oder weniger umgesetzt wird.

Es sind insgesamt vergleichsweise hohe Proteinausbeuten mit bis zu 70% erzielbar, wobei bis zu 45% aus der "Quarkphase" und ca. 22-24% aus der Albuminphase gewonnen werden können.

Es kann ein höherwertiges Endprodukt (Proteingemisch) gewonnen werden, weil Schalenreste, sowie Polyphenole, Kohlenhydrate, Phytinsäure und/oder Phytate, Legnin und Zellulose vollständig entfernt oder abgereichert sind.

Die Proteinphase enthält "natives" Protein, dessen quellfähiger Anteil nach der Gewinnung quellfähig bleibt und dessen wässrig lösbarere Anteile nach der Gewinnung wasserlöslich bleiben. Die Proteinphase ist zudem nahezu triglyceridfrei und weist nur geringe Restölwerte auf, hauptsächlich Polarlipide.

Das gute Milieu für Mikroorganismenwachstum durch die leichte Alkoholkonzentration vereinfacht die Prozesshygiene

Der Alkohol kann verdünnt im Kreislauf gefahren werden.

Anstelle der Extraktion unerwünschter Stoffe aus dem stark entölten, feinst zerkleinerten Ausgangsmaterial Rapsschrot oder Rapskuchen -wie bei den gängigen Verfahren üblich-, erfolgt hier zunächst eine Abtrennung der Schalen im Nassen. Dies wird in einem mehrstufigen Prozess dadurch gelöst, dass zunächst der Kuchen aufgebrochen wird, ohne die Kernbruchstücke noch weiter zu zerkleinern.

Insbesondere ist es vorteilhaft, die Schalen möglichst groß zu belassen. Vorzugsweise sollten sie einen mittleren Durchmesser von 0,5 mm oder mehr aufweisen. Öltröpfchen brauchen nicht größer sein, wichtig sind nicht einzelne Moleküle oder kleine Molekülverbände, sondern "Partikel".

Dann wird Wasser zugegeben und im Alkalischen wird vorsichtig gerührt. Damit wird der wasserlösliche Teil der Proteine gelöst, ein anderer Teil quillt. Die Zugabe von wässrigem Alkohol verdrängt das freie Triglycerid als spezifisch leichte Phase aus der Dispersion. Die Lecithine, insbesondere Phosphatidylcholine, sind bei geringen Alkoholkonzentrationen löslich (siehe EP 1272048 B1und zugehörige Patentfamilie).

In dieser Kombination Lauge-wässriger Alkohol sind die zwei oder drei Phasen
1) Schwer = Schalen und 2) Leicht = Protein-Lecithin-Polyphenol- Kohlenhydrat zusammen mit ölhaltigem Schaum; oder
1) Schwer = Schalen, 2) Mitte = Protein-Lecithin-Polyphenol- Kohlenhydrat 3) Leicht = Triglycerid, vorteilhaft trennbar, so im Versuch im Becherglas oder im industriellen Maßstab vorzugsweise zentrifugal.

Je besser die Abtrennung der Schalen gelingt, umso geringer sind die Proteinverluste und umso reiner ist das Endprodukt. Selbst die durch Wasserzugabe auf das bis zu 7 fache gequollene Schale ist schwerer als die Proteine in der alkoholischwässrigen Dispersion. Dies ist essentiell für eine Trennung durch Gravitation. Erschwert wird die Trennung aber durch ein festes Kleben der proteinhaltigen Aleuron Körper(Wabenschicht) an den Schalen. Diese Zellen sind dickwandig. Da die Zellmembran fast aller Zellen Lecithine enthält (neben Proteinen und anderen), kann nun durch geeignete Maßnahmen das Kleben durch ein "In-Lösung-Bringen" der Lecithine minimiert werden.

Konkret wird dies dadurch erreicht, dass die wässrige Phase eine Alkoholkonzentration von 5-40 Vol. % aufweist, (siehe Schritte S2-S4), idealerweise 12% bis 20%.

Entscheidend dafür ist bereits die Qualität des Ausgangsmaterials. Gewöhnlich ist bei kalt gepresstem Kuchen der Restölgehalt höher. Dies stört bei dem hier dargestellten Verfahren nicht. Im Gegenteil: Äußerst hilfreich ist die schönende Pressung, je moderater die Presstemperatur und desto geringer ist der Pressdruck, umso leichter ist eine nachfolgende Trennung von Schalen und Kotyledon (Keimblätter, das Kerninnere).

Das Verfahren ist auch mit "gewöhnlichem" d.h. heiß gepresstem Presskuchen anwendbar. Nur werden hierbei die Ausbeuten an Proteinen entsprechend geringer.

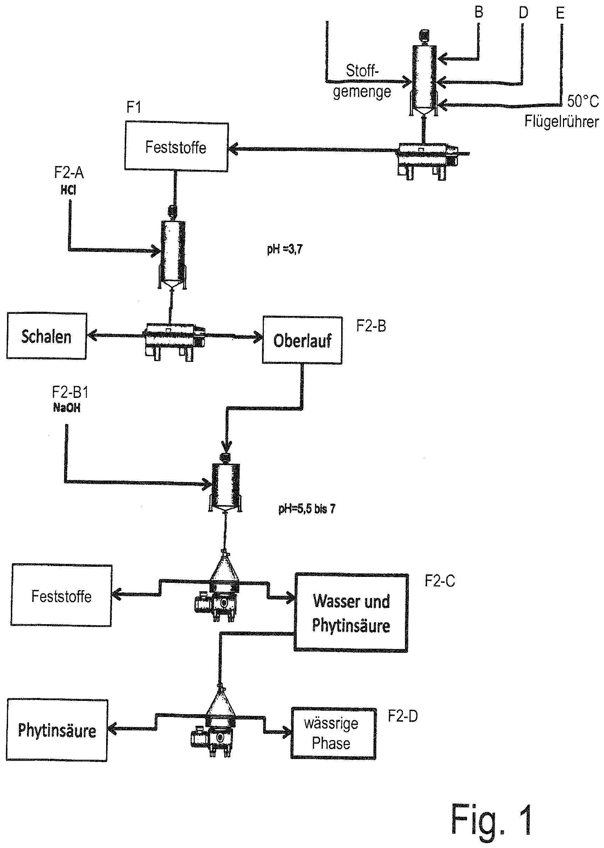

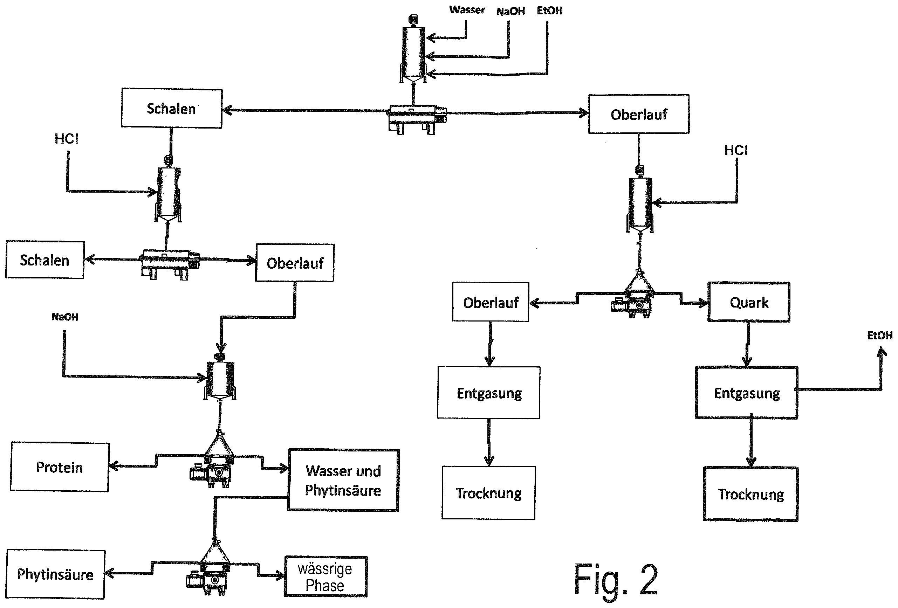

Die beiliegenden Zeichnungen, Fig. 1 und Fig. 2 erläutern ein Ausführungsbeispiel des erfindungsgemäßen Verfahrens.

Die Bereitstellung und das optionale Zerkleinern gemäß den Schritten A und B sind zur Vereinfachung nicht im Detail dargestellt.

Ausgehend von einer Zugabe von Wasser, NaOH und Ethanol, die vorzugsweise getrennt zugegeben werden, aber auch gemeinsam zugegeben werden können, erfolgt eine Trennung in eine schwere schalenhaltige Phase und in einen Oberlauf. Die weitere vorteilhafte Gewinnung von Wertstoffen aus dem Oberlauf wird insbesondere in Fig. 2 beschrieben.

In Fig. 1 wird zur schweren schalenhaltigen Phase verdünnte Salzsäure HCl (Schritt F2-A) zugegeben. Die Verarbeitung erfolgte dabei Raumtemperatur auf und beispielsweise bei einem pH-Wert von 3,7.

Die nunmehr dispergierte Phase wird sodann in eine Schalenfraktion und in eine Oberlauffraktion getrennt, wie dies zuvor in Schritt F2-B beschrieben wurde.

Sodann wird die Oberlauffraktion durch Zugabe von Lauge (z.B. NaOH-Lauge oder Ca(OH)2 oder KOH) in einen weniger sauren pH-Bereich vorzugsweise zwischen 5,5 und 7 verschoben. Je nachdem ob es rein um die Gewinnung der Phytinsäure als Phytat geht oder auch um eine zusätzliche Gewinnung von Proteinen aus dieser Fraktion entspricht die Lauge-Zugabe dem Schritt F2-B1.

Schließlich werden analog zu den Schritten H und F2-C Feststoffe, z.B. Protein von Wasser und Phytinsäure getrennt. Optional kann eine zweite Reinigung (Trennen von Phytinsäure und Wasser in einem Schritt F2-D durchgeführt werden.

Fig. 2 zeigt die Gewinnung weiterer Wertprodukte zusätzlich zur Phytinsäure. Diese Gewinnungsschritte wurden zuvor beschrieben.

## Patentansprüche

1. Verfahren zur Gewinnung wenigstens eines oder mehrerer Wertstoffe aus einem nativen, phytinsäurehaltigen bzw. phytathaltigen Stoffgemenge, wobei der wenigstens eine Wertstoff ein Phytinsäureprodukt insbesondere Phytinsäure und/oder zumindest ein Phytat ist, mit folgenden Schritten:
- Schritt A: Bereitstellen eines nativen phytinsäurehaltigen und/oder phytathaltigen Stoffgemenges aus phytinsäurehaltigen Saaten mit harten, zerbrechbaren Schalen, insbesondere aus Rapsfrüchten, insbesondere als Stoffgemenge aus den vollständigen Saaten oder aus bereits (teil-) entölten Saaten, insbesondere als Expellerschrot oder als Presskuchen, der bei einem Abpressen von Öl insbesondere mit einer Presse als Rückstand der Ölgewinnung verbleibt,
- Schritt B: sofern das Stoffgemenge aus Schritt A noch nicht zerkleinert ist: Zerkleinern des Stoffgemenges, wobei jedenfalls die Schalen aufgebrochen werden;
- Schritt C: Dispergieren des zerkleinerten Stoffgemenges aus Schritt A) oder B) mit Wasser oder einer wässrigen Lösung, wobei auf einen Teil zerkleinertes Stoffgemenge vorzugsweise bis zu maximal 8, besonders vorzugsweise bis zu maximal 6, insbesondere maximal 5 Teile Wasser zugegeben werden und wobei das Wasser und das zerkleinerte Stoffgemenge gerührt werden, so dass sich ein fließfähiger Brei bzw. eine Dispersion ergibt;
- Schritt D): Einstellen des pH-Wertes des Breis (I) aus Schritt C) in einen alkalischen Bereich pH > 9,5;
- Schritt E): Zugeben eines wasserlöslichen organischen Lösemittels, vorzugsweise eines wasserlöslichen Alkohols, insbesondere von Ethanol, vorzugsweise in verdünnter Form, zu dem Brei D), insbesondere im Anschluss an das Einstellen des pH-Wertes des Breis im Schritt D); insbesondere derart, dass eine Alkoholkonzentration erreicht wird, die kleiner als 30 % ist, um die Schalen vom Endosperm der Saaten/Früchte zu lösen;
- Schritt F1): Abtrennen einer Feststoffphase, welche den überwiegenden Anteil der Schalen aufweist, aus dem Brei aus Schritt E) vorzugsweise in einer Zentrifuge im Zentrifugalfeld;
- Schritt F2): Isolieren von Phytinsäure oder eines Phytats aus der Feststoffphase des Schrittes F1).

2. Verfahren nach Anspruch 1, **dadurch gekennzeichnet, dass** der Schritt F2) folgende Teilschritte aufweist:
- Schritt F2-A): Vermischen der Feststoffphase aus Schritt F1) mit Wasser und/oder einer wässrigen Lösung, insbesondere mit verdünnter Salzsäure, derart, dass eine fliessfähige, schalenhaltige und mit Wasser versetzte phytinsäure- und/oder phytathaltige Phase entsteht, deren pH Wert n einen saueren pH-Wertbereich verschoben ist; und
- Schritt F2-B) Abtrennen einer Feststoffphase, welche den überwiegenden Anteil der Schalen aufweist, von einer phytinsäurehaltigen und/oder phytathaltigen Flüssigkeitsphase und
- F2-C) Abtrennen der Phytinsäure aus der phytinsäurehaltigen oder phytathaltigen Flüssigkeitsphase direkt oder nach dem Durchlaufen eines oder mehrerer weiterer Schritte.

3. Verfahren nach Anspruch 2, **dadurch gekennzeichnet, dass** der folgende Teilschritt zwischen den Schritten F2-B und F2-C ausgeführt wird:
- F2-B1): Verschieben des pH-Wertes der Flüssigkeitsphase aus Schritt F2-B) in einen Bereich mit einem pH-Wert von pH > 5..

4. Verfahren nach Anspruch 1, 2 oder 3, **dadurch gekennzeichnet, dass** ferner folgende weitere Schritte durchlaufen werden:
- Schritt G): Verschieben des pH-Wertes des von Schalen befreiten Breis aus Schritt F) in den pH-Bereich von pH = 4,5 bis pH = 7,2; und
- Schritt H): Trennen des schalenfreien Breis, dessen pH-Wert in Schritt G) ins Saure verschoben worden ist, - vorzugweise in einer Zentrifuge, insbesondere in wenigstens einem Dekanter oder einem Separator in mehrere Phasen, wobei eine dieser Phasen eine globulinhaltige Proteinkonzentratphase ist (Proteinquark).

5. Verfahren nach Anspruch 4, **dadurch gekennzeichnet, dass** im Schritt H) folgende Phasentrennung in einem oder zwei Schritten, vorzugsweise in einer Zentrifuge, insbesondere in einem Dekanter oder Separator, vorgenommen wird:
- ölhaltige Phase mit Triglyceringehalt;
- wässrige Phase mit Albumingehalt; und
- die Proteinkonzentratphase (Proteinquark);

6. Verfahren nach Anspruch 5, **dadurch gekennzeichnet, dass** im Schritt H) folgende Phasentrennung in einem oder zwei Schritten, vorzugsweise in einer Zentrifuge, insbesondere in einem Dekanter oder Separator, in folgende zwei Wertstoffphasen vorgenommen wird:
- wässrige Phase mit Albumingehalt und Restölgehalt; und
- die Proteinkonzentratphase (Proteinquark);

7. Verfahren nach Anspruch 4, 5 oder 6, **dadurch gekennzeichnet, dass** eine Filtration der Wasserphase aus Schritt H) zur Albumin-Aufkonzentrierung erfolgt, um derart die Albuminphase als Wertstoff zu gewinnen.

8. Verfahren nach einem der Ansprüche 4 bis 7, **dadurch gekennzeichnet, dass** eine Proteinkonzentratphase gewonnen wird, die in der Farbeinstufungsskala "RAL" den Werten RAL 1015 oder RAL 1013 zuzuordnen ist oder ein Gemisch dieser beiden Farbstufen ist.

9. Verfahren nach einem der vorstehenden Ansprüche, **dadurch gekennzeichnet, dass** als das Stoffgemenge/Ausgangsmaterial "kurz zuvor hergestelltes Zwischenprodukt" als Rapspresskuchen nach einer Entölung verarbeitet wird , d.h. nach der Vorstufe sind nicht mehr als 31 Tage vergangen oder dass als das Stoffgemenge/Ausgangsmaterial "frisches Zwischenprodukt" verarbeitet wird, d.h. nach der Vorstufe dürfen nicht mehr als 3 Tage vergangen sein, vorzugsweise sogar nur weniger als 48 Stunden oder 24 Stunden.

10. Verfahren nach einem der vorstehenden Ansprüche, **dadurch gekennzeichnet, dass** als das Stoffgemenge in Schritt A kalt gepressten Material, nämlich ein kalt gepresster Rapspresskuchen verwendet wird, der bei einer Temperatur kleiner als 70°C, vorzugsweise sogar kleiner als 60°C, gepresst worden ist.

11. Verfahren nach einem der vorstehenden Ansprüche, **dadurch gekennzeichnet, dass** einer oder mehrere der Trennschritte der vorstehenden Ansprüche jeweils in einem 3-Phasendekanter oder in zumindest zwei Schritten in 2-Phasendekantern erfolgen.

12. Verfahren zur Gewinnung wenigstens eines oder mehrerer Wertstoffe, insbesondere eines Phytinsäureproduktes, vorzugsweise von Phytinsäure und/oder von Phytat, aus einem nativen, phytinsäurehaltigen bzw. phytathaltigen Stoffgemenge, mit folgenden Schritten:
100) Bereitstellen eines nativen phytinsäurehaltigen und/oder phytathaltigen, zerkleinerten Stoffgemenges aus phytinsäurehaltigen und/oder phytathaltigen Saaten;
200) Vorbehandeln des zerkleinerten Stoffgemenges, um einen fliessfähigen alkalischen, vorzugsweise alkoholisch-alkalischen, Brei zu erhalten, wobei das Vorbehandeln die folgenden Schritte umfasst:
- Schritt C: Dispergieren des zerkleinerten Stoffgemenges aus Schritt A) oder B) mit Wasser oder einer wässrigen Lösung, wobei auf einen Teil zerkleinertes Stoffgemenge vorzugsweise bis zu maximal 8, besonders vorzugsweise bis zu maximal 6, insbesondere maximal 5 Teile Wasser zugegeben werden und wobei das Wasser und das zerkleinerte Stoffgemenge gerührt werden, so dass sich ein fließfähiger Brei bzw. eine Dispersion ergibt;
- Schritt D): Einstellen des pH-Wertes des Breis (I) aus Schritt C) in einen alkalischen Bereich pH > 9,5;
- Schritt E): Zugeben eines wasserlöslichen organischen Lösemittels, vorzugsweise eines wasserlöslichen Alkohols, insbesondere von Ethanol, vorzugsweise in verdünnter Form, zu dem Brei D), insbesondere im Anschluss an das Einstellen des pH-Wertes des Breis im Schritt D); insbesondere derart, dass eine Alkoholkonzentration erreicht wird, die kleiner als 30 % ist, um, sofern vorhanden, Schalen vom Endosperm der Saaten/Früchte zu lösen;
300) Abtrennen einer Feststoffphase, welche Phytinsäure und/oder zumindest ein Phytat aufweist, aus dem fliessfähigen Brei, vorzugsweise in einer Zentrifuge im Zentrifugalfeld; und
400) Isolieren von Phytinsäure und/oder des Phytats aus der Feststoffphase, insbesondere nach einem Durchlaufen eines oder mehrerer weiterer Schritte.

13. Verfahren nach Anspruch 12, **dadurch gekennzeichnet, dass** das native sowie phytinsäurehaltige und/oder phytathaltige, zerkleinerte Stoffgemenge aus phytinsäurehaltigen Saaten mit den gesamten Schalen der Saaten oder einem Teil der Schalen der Saaten besteht und dass die Phytinsäure und/oder das Phytat in einen schalenhaltigen Feststoffanteil des Stoffgemenges im Schritt des Vorbehandelns 200) verschoben wird.

14. Verfahren nach Anspruch 12, **dadurch gekennzeichnet, dass** das native sowie phytinsäurehaltige und/oder phytathaltige, zerkleinerte Stoffgemenge aus phytinsäurehaltigen Saaten ohne Schalenanteil besteht und dass die Phytinsäure und/oder das Phytat in einen Feststoffanteil des Stoffgemenges im Schritt des Vorbehandelns 200) verschoben wird.

15. Verfahren nach Anspruch 12 oder 13, **dadurch gekennzeichnet, dass** der Schritt 400) folgende Teilschritte aufweist:
- Schritt 400-A): Vermischen der Feststoffphase aus Schritt 300) mit Wasser und/oder einer wässrigen Lösung, insbesondere mit verdünnter Salzsäure, derart, dass eine fliessfähige, schalenhaltige und mit Wasser versetzte phytinsäure- und/oder phytathaltige Phase entsteht, deren pH Wert in einen saueren pH-Wertbereich, insbesondere pH < 4, verschoben ist; und
- Schritt 400-B) Abtrennen einer Feststoffphase, welche ggf. den überwiegenden Anteil der Schalen aufweist, von einer phytinsäurehaltigen und/oder phytathaltigen Flüssigkeitsphase und
- F400-C) Abtrennen der Phytinsäure aus der phytinsäurehaltigen oder phytathaltigen Flüssigkeitsphase direkt oder nach dem Durchlaufen eines oder mehrerer weiterer Schritte

16. Verfahren nach Anspruch 15, **dadurch gekennzeichnet, dass** der folgende Teilschritt zwischen den Schritten F400-B und F400-C ausgeführt wird:
- F400-B1): Verschieben des pH-Wertes der Flüssigkeitsphase aus Schritt F400-B) in einen Bereich mit einem pH-Wert von pH > 5 durch eine Lauge.

## Claims

1. A method for obtaining at least one or a plurality of recyclable materials from a native material quantity containing phytic acid or phytate, wherein the at least one recyclable material is a phytic acid product, in particular phytic acid and/or at least one phytate, with the following steps:
- Step A: Supplying of a native material quantity containing phytic acid and/or phytate from seeds containing phytic acid with hard, breakable shells, in particular from rape fruits, in particular as material quantity from the whole seeds or from seeds that have already been (partially) de-oiled, in particular as expeller meal or as press cake left over as residue from oil extraction, in particular with a press,
- Step B: If the material quantity from step A has not yet been comminuted: comminution of the material quantity, wherein at any rate the shells are broken open;
- Step C: Dispersal of the comminuted material quantity from step A) or B) with water or with an aqueous solution, wherein preferably up to 8 parts maximum, particularly preferably up to 6 parts maximum, in particular 5 parts maximum of water are added to one part of comminuted material quantity and wherein the water and the comminuted material quantity are stirred so as to give rise to a flowable mash or a dispersion;
- Step D): Adjustment of the pH value of the mash (I) from step C) in an alkaline range of pH > 9.5;
- Step E): Addition of a water-soluble organic solvent, preferably a water-soluble alcohol, in particular ethanol, preferably in diluted form, to the mash D), in particular subsequently to the adjustment of the pH of the mash in step D); in particular in such a way that an alcohol concentration is reached that is less than 30% in order to detach the shells from the endosperm of the seeds/fruits;
- Step F1): Separation of a solid phase, which has the predominant fraction of the shells, from the mash from step E), preferably in a centrifuge in the centrifugal field;
- Step F2): Isolation of phytic acid or of a phytate from the solid phase of step F1).

2. The method as claimed in claim 1, **characterized in that** step F2) has the following sub-steps:
- Step F2-A): Mixing of the solid phase from step F1) with water and/or with an aqueous solution, in particular with diluted hydrochloric acid so as to give rise to a flowable shell-containing and water-saturated phase containing phytic acid and/or phytate whose pH value is shifted into an acidic range; and
- Step F2-B): Separation of a solid phase, which has the predominant fraction of the shells, from a liquid phase containing phytic acid and/or phytate, and
- F2-C): Separation of the phytic acid from the liquid phase containing phytic acid or phytate directly or after carrying out one or a plurality of additional steps.

3. The method as claimed in claim 2, **characterized in that** the following sub-step is carried out between steps F2-B and F2-C:
- F2-B1): Shifting of the pH value of the fluid phase from step F2-B) into a range with a pH value of pH > 5.

4. The method as claimed in claim 1, 2, or 3, **characterized in that** the following additional steps are also carried out:
- Step G): Shifting of the pH value of the mash freed of shells from step F) into the range of pH = 4.5 to pH = 7.2; and
- Step H): Separation of the shell-free mash whose pH value was shifted into the acidic range in step G), preferably in a centrifuge, in particular in at least one decanter or a separator, into a plurality of phases, wherein one of these phases is a globulin-containing protein concentrate phase (protein curd).

5. The method as claimed in claim 4, **characterized in that** in step H), the following phase separation is carried out in one or two steps, preferably in a centrifuge, in particular in a decanter or separator:
- oil-containing phase with triglyceride content;
- aqueous phase with albumin content; and
- the protein concentrate phase (protein curd).

6. The method as claimed in claim 5, **characterized in that** in step H), the following phase separation into the following two recyclable material phases is carried out in one or two steps, preferably in a centrifuge, in particular in a decanter or separator:
- aqueous phase with albumin content and residual oil content; and
- the protein concentrate phase (protein curd).

7. The method as claimed in claim 4, 5, or 6, **characterized in that** the aqueous phase from step H) is filtered to build up the albumin concentration, in order to extract the albumin phase as a recyclable material.

8. The method according one of claims 4 through 7, **characterized in that** a protein concentrate phase is extracted that is assigned to the values RAL 1015 or RAL 1013 in the "RAL" color classification scale or is a mixture of these two color tones.

9. The method as in one of the preceding claims, **characterized in that** "intermediate product recently produced beforehand" is processed as the material quantity/source material as a rape press cake after de-oiling; in other words no more than 31 days have passed since the preliminary step or that "fresh intermediate product" is processed as the material quantity/source material, in other words no more than 3 days, preferably less than 48 hours or even 24 hours, may have passed since the preliminary step.

10. The method as in one of the preceding claims, **characterized in that** as the material quantity in step A, use is made of cold-pressed material, namely a cold-pressed rape press cake, which was pressed at a temperature less than 70°C, preferably even less than 60°C.

11. The method as in one of the preceding claims, **characterized in that** one or a plurality of the separation steps of the preceding claims each take place in a 3-phase decanter or in at least two steps in 2-phase decanters.

12. A method for extracting at least one or a plurality of recyclable materials, in particular a phytic acid product, preferably phytic acid and/or phytate, from a native material quantity containing phytic acid or containing phytate, with the following steps:
100) Supplying of a comminuted native material quantity containing phytic acid and/or containing phytate from seeds containing phytic acid and/or containing phytate;
200) Pretreatment of the comminuted material quantity in order to obtain a flowable alkaline, preferably alcoholic-alkaline mash, wherein the pretreatment comprises the following steps:
- Step C: Dispersal of the comminuted material quantity from step A) or B) with water or with an aqueous solution, wherein preferably up to 8 parts maximum, particularly preferably up to 6 parts maximum, in particular 5 parts maximum of water are added to one part of comminuted material quantity and wherein the water and the comminuted material quantity are stirred so as to give rise to a flowable mash or a dispersion;
- Step D): Adjustment of the pH value of the mash (I) from step C) in an alkaline range of pH > 9.5;
- Step E): Addition of a water-soluble organic solvent, preferably a water-soluble alcohol, in particular ethanol, preferably in diluted form, to the mash D), in particular subsequently to the adjustment of the pH of the mash in step D); in particular in such a way that an alcohol concentration is reached that is less than 30% in order to detach the shells from the endosperm of the seeds/fruits;
300) Separation of a solid phase that contains phytic acid and/or at least one phytate from the flowable mash, preferably in a centrifuge in the centrifugal field; and
400) Isolation of phytic acid and/or of the phytate from the solid phase, in particular after carrying out one or a plurality of additional steps.

13. The method as claimed in claim 12, **characterized in that** the native as well as phytic acid-containing and/or phytate-containing comminuted material quantity consists of phytic acid-containing seeds with the entire shells of the seeds or a portion of the shells of the seeds and that the phytic acid and/or the phytate is shifted into a shell-containing solid fraction of the material quantity in the pretreatment step 200).

14. The method as claimed in claim 12, **characterized in that** the native as well as phytic acid-containing and/or phytate-containing comminuted material quantity consists of phytic acid-containing seeds without a shell fraction and that the phytic acid and/or the phytate is shifted into a solid fraction of the material quantity in the pretreatment step 200).

15. The method as claimed in claim 12 or 13, **characterized in that** step 400) has the following sub-steps:
- Step 400-A): Mixing of the solid phase from step 300) with water and/or with an aqueous solution, in particular with diluted hydrochloric acid, so as to give rise to a flowable, shell-containing, and water-saturated phase containing phytic acid and/or containing phytate whose pH value is shifted into an acidic pH range, in particular pH < 4; and
- Step 400-B): Separation of a solid phase, which optionally has the predominant fraction of the shells, from a phytic acid-containing and/or phytate-containing liquid phase and
- F400-C): Separation of the phytic acid from the phytic acid-containing or phytate-containing liquid phase directly or after carrying out one or a plurality of additional steps.

16. The method as claimed in claim 15, **characterized in that** the following sub-step is carried out between steps F400-B and F400-C:
- F400-B1): Shifting of the pH value of the liquid phase from step F400-B) into a range with a value of pH > 5 by using an alkaline solution.

## Revendications

1. Procédé d'obtention d'au moins une ou plusieurs substances de valeur à partir d'un mélange natif de substances contenant de l'acide phytique ou des phytates, dans lequel ladite au moins une substance de valeur est un dérivé d'acide phytique, en particulier de l'acide phytique et/ou au moins un phytate, comprenant les étapes suivantes :
- étape A : mise à disposition d'un mélange natif de substances contenant de l'acide phytique et/ou du phytate provenant de graines contenant de l'acide phytique avec des coques dures et cassantes, en particulier de fruits de colza, en particulier sous la forme d'un mélange de substances provenant des graines complètes ou de graines déjà (partiellement) déshuilées, en particulier sous la forme de broyat ou de tourteau de presse, qui subsiste en tant que résidu de l'extraction d'huile par pressage en particulier à l'aide d'une presse,
- étape B : si le mélange de substances de l'étape A n'a pas encore été broyé : broyage du mélange de substances, les coques étant cassées dans tous les cas ;
- étape C : dispersion du mélange de substances broyé de l'étape A) ou B) avec de l'eau ou une solution aqueuse, lors de laquelle de préférence au maximum 8, particulièrement de préférence au maximum 6, en particulier au maximum 5 parts d'eau sont ajoutées à une part de mélange de substances broyé, et l'eau et le mélange de substances broyé sont remués pour obtenir une pulpe fluide ou une dispersion ;
- étape D) : réglage de la valeur pH de la pulpe (I) de l'étape C) dans une plage alcaline pH > 9,5 ;
- étape E) : ajout d'un solvant organique hydrosoluble, de préférence un alcool hydrosoluble, en particulier de l'éthanol, de préférence sous forme diluée, à la pulpe D), en particulier après le réglage de la valeur pH de la pulpe à l'étape D) ; en particulier de manière à obtenir une concentration en alcool inférieure à 30 % pour dissoudre les coques de l'endosperme des graines/fruits ;
- étape F1) : séparation d'une phase solide, qui présente la majeure partie des coques, de la pulpe de l'étape E), de préférence dans le champ centrifuge d'une centrifugeuse ;
- étape F2) : isolement de l'acide phytique ou d'un phytate de la phase solide de l'étape F1).

2. Procédé selon la revendication 1, **caractérisé en ce que** l'étape F2) comprend les sous-étapes suivantes :
- étape F2-A) :mélange de la phase solide de l'étape F1) avec de l'eau et/ou une solution aqueuse, en particulier avec de l'acide chlorhydrique dilué, de manière à obtenir une phase fluide contenant de l'acide phytique et/ou des phytates, contenant des coques et mélangée à de l'eau, dont la valeur pH n est déplacée dans une plage de valeur pH acide ; et
- étape F2-B) séparation d'une phase solide, qui contient la majeure partie des coques, d'une phase liquide contenant de l'acide phytique et/ou des phytates et
- F2-C) séparation de l'acide phytique de la phase liquide contenant de l'acide phytique ou des phytates directement ou après passage par une ou plusieurs étapes supplémentaires.

3. Procédé selon la revendication 2, **caractérisé en ce que** la sous-étape suivante est exécutée entre les étapes F2-B et F2-C :
- F2-B1) : déplacement de la valeur pH de la phase liquide de l'étape F2-B) dans une plage avec une valeur pH de pH > 5.

4. Procédé selon la revendication 1, 2 ou 3, **caractérisé en ce qu'**il comprend en outre les étapes suivantes :
- étape G) : déplacement de la valeur pH de la pulpe débarrassée des coques de l'étape F) dans la plage de pH allant de pH = 4,5 à pH = 7,2 ; et
- étape H) : séparation de la pulpe exempte de coques, dont la valeur pH a été déplacée dans la plage acide à l'étape G), de préférence dans une centrifugeuse, en particulier dans au moins un décanteur ou un séparateur en plusieurs phases, l'une de ces phases étant une phase de concentré protéique contenant des globulines (caillé protéique).

5. Procédé selon la revendication 4, **caractérisé en ce qu'**à l'étape H), la séparation de phases suivante est effectuée en une ou deux étapes, de préférence dans une centrifugeuse, en particulier dans un décanteur ou un séparateur :
- phase huileuse contenant de la triglycérine ;
- phase aqueuse contenant de l'albumine ; et
- la phase de concentré protéique (caillé protéique).

6. Procédé selon la revendication 5, **caractérisé en ce qu'**à l'étape H), la séparation de phases suivante est effectuée en une ou deux étapes, de préférence dans une centrifugeuse, en particulier dans un décanteur ou un séparateur, en deux phases de substances de valeur suivantes :
- phase aqueuse contenant de l'albumine et de l'huile résiduelle ; et
- la phase de concentré protéique (caillé protéique).

7. Procédé selon la revendication 4, 5 ou 6, **caractérisé en ce qu'**une filtration de la phase aqueuse de l'étape H) est effectuée pour concentrer l'albumine afin d'obtenir la phase d'albumine comme substance de valeur.

8. Procédé selon l'une des revendications 4 à 7, **caractérisé en ce qu'**on obtient une phase de concentré protéique qui est à associer aux valeurs RAL 1015 ou RAL 1013 dans l'échelle de classification des couleurs « RAL » ou qui est un mélange de ces deux nuances de couleur.

9. Procédé selon l'une des revendications précédentes, **caractérisé en ce que** le mélange de substance/la matière de départ transformé(e) en tourteau de colza après déshuilage est un « produit intermédiaire fabriqué peu de temps auparavant », c'est-à-dire que pas plus de 31 jours se sont écoulés après l'étape préliminaire ou que le mélange de substance/la matière de départ est un « produit intermédiaire frais », c'est-à-dire que pas plus de 3 jours, de préférence même moins de 48 heures ou 24 heures, ne doivent s'être écoulés après l'étape préliminaire.

10. Procédé selon l'une des revendications précédentes, **caractérisé en ce que** le mélange de substances utilisé à l'étape A est une matière pressée à froid, à savoir un tourteau de colza pressé à froid, qui a été pressé à une température inférieure à 70 °C, de préférence même inférieure à 60 °C.

11. Procédé selon l'une des revendications précédentes, **caractérisé en ce qu'**une ou plusieurs des étapes de séparation des revendications précédentes sont effectuées chaque fois dans un décanteur à trois phases ou en au moins deux étapes dans un décanteur à deux phases.

12. Procédé d'obtention d'au moins une ou plusieurs substances de valeur, en particulier d'un dérivé d'acide phytique, de préférence d'acide phytique et/ou d'un phytate, à partir d'un mélange natif de substances contenant de l'acide phytique ou des phytates, comprenant les étapes suivantes :
100) mise à disposition d'un mélange natif de substances broyé contenant de l'acide phytique et/ou des phytates provenant de graines contenant de l'acide phytique et/ou des phytates ;
200) prétraitement du mélange de substances broyé pour obtenir une pulpe alcaline fluide, de préférence alcoolique-alcaline, le prétraitement comprenant les étapes suivantes :
- étape C : dispersion du mélange de substances broyé de l'étape A) ou B) avec de l'eau ou une solution aqueuse, lors de laquelle de préférence au maximum 8, particulièrement de préférence au maximum 6, en particulier au maximum 5 parts d'eau sont ajoutées à une part de mélange de substances broyé, et l'eau et le mélange de substances broyé sont remués pour obtenir une pulpe fluide ou une dispersion ;
- étape D) : réglage de la valeur pH de la pulpe (I) de l'étape C) dans une plage alcaline pH > 9,5 ;
- étape E) : ajout d'un solvant organique hydrosoluble, de préférence un alcool hydrosoluble, en particulier de l'éthanol, de préférence sous forme diluée, à la pulpe D), en particulier après le réglage de la valeur pH de la pulpe à l'étape D) ; en particulier de manière à obtenir une concentration en alcool inférieure à 30 % pour dissoudre des coques de l'endosperme des graines/fruits éventuellement présentes ;
300) séparation d'une phase solide qui présente de l'acide phytique et/ou au moins un phytate de la pulpe fluide, de préférence dans le champ centrifuge d'une centrifugeuse ; et
400) isolement de l'acide phytique et/ou du phytate de la phase solide, en particulier après passage par une ou plusieurs étapes supplémentaires.

13. Procédé selon la revendication 12, **caractérisé en ce que** le mélange natif de substances broyé contenant de l'acide phytique et/ou des phytates est constitué de graines contenant de l'acide phytique avec toutes les coques des graines ou une partie des coques des graines et que l'acide phytique et/ou le phytate est déplacé dans une fraction solide contenant les coques du mélange de substances à l'étape de prétraitement 200).

14. Procédé selon la revendication 12, **caractérisé en ce que** le mélange natif de substances broyé contenant de l'acide phytique et/ou des phytates est constitué de graines contenant de l'acide phytique sans fraction de coques et que l'acide phytique et/ou le phytate est déplacé dans une fraction solide du mélange de substances à l'étape de prétraitement 200).

15. Procédé selon la revendication 12 ou 13, **caractérisé en ce que** l'étape 400) comprend les sous-étapes suivantes :
- étape 400-A) : mélange de la phase solide de l'étape 300) avec de l'eau et/ou une solution aqueuse, en particulier avec de l'acide chlorhydrique dilué, de manière à obtenir une phase fluide contenant de l'acide phytique et/ou des phytates, contenant des coques et mélangée à de l'eau, dont la valeur pH n est déplacée dans une plage de valeur pH acide, en particulier pH < 4 ; et
- étape 400-B) séparation d'une phase solide, qui contient éventuellement la majeure partie des coques, d'une phase liquide contenant de l'acide phytique et/ou des phytates et
- F400-C) séparation de l'acide phytique de la phase liquide contenant de l'acide phytique ou des phytates directement ou après passage par une ou plusieurs étapes supplémentaires.

16. Procédé selon la revendication 15, **caractérisé en ce que** la sous-étape suivante est effectuée entre les étapes F400-B et F400-C :
- F400-B1) : déplacement de la valeur pH de la phase liquide de l'étape F400-B) dans une plage avec une valeur pH de pH > 5 par une solution alcaline.
